# EUROPÄISCHE PATENTANMELDUNG

(11) **EP 3 699 036 A1**
(43) Veröffentlichungstag der Anmeldung: **26.08.2020**
(21) Anmeldenummer: 20150527.8
(22) Anmeldetag: 07.01.2020
(51) Int. Cl.: B60R 21/13, A62C 31/00

(54) **SCHUTZRAHMEN FÜR EIN FAHRZEUG**

(30) Priorität: 19.02.2019 DE 102019104196
(71) Anmelder: Alpha Robotics Germany GmbH & Co. KG, 49393 Lohne (DE)
(72) Erfinder: Rasche, Oliver, 49456 Bakum (DE)
(74) Vertreter: Siekmann, Gunnar

(57) **Zusammenfassung**

Bei einem Schutzrahmen für ein Fahrzeug aus miteinander verbundenen Rahmenrohren, wobei der Schutzrahmen Befestigungspunkte zur Befestigung des Schutzrahmen an dem zu schützenden Fahrzeug aufweist, ist erfindungswesentlich vorgesehen, dass mindestens ein Rahmenrohr zur Leitung eines Fluides ausgebildet ist und dass mindestens ein Rahmenrohr mindestens eine Fluiddüse zum Versprühen des Fluides aufweist.

Ein weiterer Aspekt der Erfindung betrifft ein Fahrzeug mit einem erfindungsgemäßen Schutzrahmen.

## Beschreibung

Die Erfindung betrifft einen Schutzrahmen für ein Fahrzeug aus miteinander verbundenen Rahmenrohren, wobei der Schutzrahmen Befestigungspunkte zur Befestigung des Schutzrahmens an dem zu schützenden Fahrzeug aufweist. Ein weiterer Aspekt der Erfindung betrifft ein Fahrzeug mit einem erfindungsgemäßen Schutzrahmen.

Schutzrahmen der eingangs genannten Art sind bekannt und kommen beispielsweise bei Fahrzeugen, die für den Geländeeinsatz vorgesehen sind, zur Verwendung. Schutzrahmen können beispielsweise zum Schutz des Fahrzeuges selber oder sich in oder auf dem Fahrzeug befindlichen Personen, insbesondere als Überrollbügel oder Rammschutzbügel, dienen. Insbesondere in Bereichen mit einem hohen Gefährdungspotential können neben bemannten auch unbemannte, beispielsweise ferngesteuerte, Fahrzeuge zum Einsatz kommen, um kein Rettungspersonal in Gefahr zu bringen. Beispielsweise können solche unbemannten Fahrzeuge zur Brandbekämpfung, zur Entschärfung von Sprengkörpern oder auch in kontaminierten Bereichen eingesetzt werden. Bei solchen Fahrzeugen können Schutzrahmen zum Schutz des Fahrzeuges und der an dem Fahrzeug montierten Anbauteile vor Beschädigungen durch Kollisionen, also als Rammschutz, zum Einsatz kommen.

Insbesondere bei Fahrzeugen die zur Brandbekämpfung eingesetzt werden, ist neben dem Schutz des Fahrzeuges vor Beschädigungen durch Kollisionen ein Schutz des Fahrzeuges vor Beschädigungen durch große Hitzeentwicklungen erforderlich.

Der Erfindung liegt die Aufgabe zugrunde, einen Schutzrahmen für ein Fahrzeug vorzuschlagen, mit dem sowohl ein Schutz des Fahrzeuges vor Beschädigung durch Kollisionen als auch vor Beschädigung durch große Hitze gewährleistet ist.

Die Lösung dieser Aufgabe erfolgt mit einem Schutzrahmen mit den Merkmalen des Patentanspruchs 1 sowie durch ein Fahrzeug mit den Merkmalen des Patentanspruchs 11. Weiterbildungen und vorteilhafte Ausgestaltungen sind in den Unteransprüchen angegeben

Bei einem Schutzrahmen für ein Fahrzeug aus miteinander verbundenen Rahmenrohren, wobei der Schutzrahmen Befestigungspunkte zur Befestigung des Schutzrahmens an dem zu schützenden Fahrzeug aufweist, ist erfindungswesentlich vorgesehen, dass mindestens ein Rahmenrohr zur Leitung eines Fluides ausgebildet ist und dass mindestens ein Rahmenrohr mindestens eine Fluiddüse zum Versprühen des Fluides aufweist.

Ein Schutzrahmen für ein Fahrzeug, insbesondere für ein Fahrzeug zur Brandbekämpfung, ist aus miteinander verbundenen Rahmenrohren aufgebaut. Bei den Rahmenrohren kann es sich insbesondere um Rundrohr aus einem metallischen Material, beispielsweise aus Edelstahl, Aluminium oder Ähnlichem, handeln. Die Rahmenrohre sind beispielsweise durch Verbindungsmuffen, Schweißnähte oder Ähnliches miteinander zu einem käfigartigen Schutzrahmen verbunden. Durch die Rahmenrohre ist somit ein Schutzrahmen ausgebildet, der das Fahrzeug vor Beschädigungen durch Kollision oder Ähnlichem schützt. Der Schutzrahmen ist hierbei an die Abmessungen des zu schützenden Fahrzeuges angepasst, so dass der Schutzrahmen die Stoßenergie von Kollisionsereignissen aufnehmen kann. Der Schutzrahmen weist Befestigungspunkte auf, an denen, beispielsweise mittels Schraubverbindungen, der Schutzrahmen mit dem zu schützenden Fahrzeug verbunden werden kann. Weiterhin sind die Rahmenrohre zur Leitung eines Fluides, insbesondere zur Leitung von Wasser, ausgebildet. Somit kann beispielsweise ein Fluid durch die Rohre des Schutzrahmens geleitet werden. Die Rahmenrohre weisen mindestens eine, vorzugsweise mehrere, Fluiddüsen auf, durch die das geleitete Fluid in die Umgebung des Fahrzeuges abgegeben, insbesondere in der unmittelbaren Umgebung versprüht, werden kann. Bei den Fluiddüsen kann es sich um Einschraubdüsen handeln, die in die Rahmenrohre, insbesondere in Öffnungen der Rahmenrohre, eingeschraubt werden. Dadurch, dass das Fluid durch die Fluiddüsen der Rohrleitungen in der Umgebung des Fahrzeuges versprüht wird, kann aufgrund der kühlenden Wirkung des verdunstenden Fluides ein Schutz des Fahrzeuges gegen große Hitze erreicht werden.

In einer Ausführungsform der Erfindung bildet mindestens ein Rahmenrohr eine Fluidleitung aus. Die innen hohlen Rahmenrohre, aus denen der Schutzrahmen gefertigt ist, können als Fluidleitungen, insbesondere zur Leitung von Wasser, dienen. Hierzu wird das zu leitende Fluid aus einem Fluidvorrat, beispielsweise einem Fluidbehälter, in die Rahmenrohre als Rohrleitungen eingeleitet und durch die an den Rahmenrohren angeordneten Fluiddüsen an die Umgebung des Fahrzeuges abgegeben. Durch die Verwendung der Rahmenrohre als Fluidleitungen ist das Versprühen des Fluides in der Umgebung ermöglicht, ohne dass hierfür extra Bauteile vorgesehen sein müssen.

In einer Ausführungsform der Erfindung weist mindestens ein Rahmenrohr eine Fluidleitung auf. Zur Fluidleitung können die Rahmenrohre eine Fluidleitung aufweisen, wobei die Fluidleitungen beispielsweise durch Schlauchleitungen gegeben sein können. Die Fluidleitungen können beispielsweise im Inneren der Rahmenrohre verlegt sein und mit den Fluiddüsen der Rahmenrohre verbunden sein. Weiterhin können die Fluidleitungen mit den äußeren Mantelflächen der Rahmenrohre verbunden sein, also außerhalb der Rahmenrohre verlegt sein. Durch die Verwendung von separaten Fluidleitungen ist ein einfacher Austausch der Fluidleitungen, beispielsweise bei einer Beschädigung der Fluidleitung, ermöglicht.

In einer Weiterbildung der Erfindung handelt es sich bei den Fluiddüsen um Zerstäuberdüsen. Um eine möglichst gute kühlende Wirkung des versprühten Fluides in der Umgebung des Fahrzeuges zu erreichen, werden Zerstäuberdüsen eingesetzt. Insbesondere können die Zerstäuberdüsen das Fluid kegelförmig versprühen, die Zerstäuberdüsen können also jeweils eine kegelförmige Sprühcharakteristik aufweisen. Durch die Zerstäuberdüsen ist eine feine Vernebelung des Fluides und somit eine gute Kühlwirkung durch die Verdunstung des Fluides ermöglicht. Bei den Zerstäuberdüsen kann es sich beispielsweise um Einschraubdüsen handeln, die in die Rahmenrohre eingeschraubt werden.

In einer Weiterbildung der Erfindung weist der Schutzrahmen mindestens einen Fluidanschluss zum Anschluss an eine Fluidversorgung des Fahrzeuges auf. Das Fahrzeug, an dem der Schutzrahmen angeordnet ist, kann eine Fluidversorgung, beispielsweise einen mit Wasser gefüllten Behälter aufweisen, an den die Fluidleitungen des Schutzrahmens angeschlossen werden können. Zudem kann das Fahrzeug eine Pumpenvorrichtung aufweisen, mit der das in dem Behälter bereitgehaltene Fluid durch die Fluidleitungen gepumpt werden kann. Beispielsweise kann der Fluiddruck in den Fluidleitungen 10 bar betragen. Hierzu kann der Schutzrahmen mindestens einen Fluidanschluss aufweisen. Bei einem Fluidanschluss kann es sich beispielsweise um ein Kopplungsstück handeln, an das beispielsweise eine flexible Schlauchleitung angeschlossen werden kann, sodass die flexible Schlauchleitung die Fluidleitungen mit dem Fluidbehälter verbindet. Weiterhin kann auch eine Schlauchleitung fest mit den Fluidleitungen verbunden sein, die dann mit dem Fluidbehälter des Fahrzeuges verbunden werden kann. Zudem kann an das Kopplungsstück auch eine Schlauchleitung zu einer stationären Fluidversorgung, beispielsweise zu einem Wasserhahn oder einem Hydranten, angeschlossen werden. Bei den Schlauchleitungen kann es sich um eine flexible Druckleitung handeln, mittels der die Fluidleitungen an die Fluidversorgung des Fahrzeuges angeschlossen werden können. Insbesondere sind die Fluidleitungen untereinander so verbunden, dass mittels eines oder zweier Fluidanschlüsse alle Zerstäuberdüsen mit Fluid versorgt werden können. Durch die flexiblen Schlauchleitungen, insbesondere Druckleitungen, ist ein besonders robuster Anschluss der Rohrleitungen an die Fluidversorgung gegeben.

In einer Weiterbildung der Erfindung sind die Strahlrichtungen der Fluiddüsen vom Fahrzeug abgewandt ausgerichtet. Um insbesondere beim Einsatz in Bereichen mit großer Hitze einen Selbstschutz des Fahrzeuges zu erreichen, werden Fluiddüsen an den Fluidleitungen eingesetzt, um die unmittelbare Umgebung des Fahrzeuges durch das Versprühen eines Fluides abzukühlen. Um ein Abkühlen der unmittelbaren Umgebung des Fahrzeuges zu erreichen, sind die Fluiddüsen vom Fahrzeug abgewandt ausgerichtet. Durch die Fluiddüsen kann das Fluid jeweils kegelförmig versprüht werden, um einen Fluidnebel um das zu schützende Fahrzeug herum zu erzeugen. Durch die Fluiddüsen wird somit beispielsweise Wasser vom Heck, von der Front sowie von den Seiten des Fahrzeuges ausgehend in die Umgebung versprüht. Durch die Anordnung der Düsen mit einer Strahlrichtung ausgehend von den Seiten des Fahrzeuges ist eine Abkühlung der Umgebung des Fahrzeuges erreicht.

In einer Weiterbildung der Erfindung ist die Strahlrichtung mindestens einer Fluiddüse von der Front des Fahrzeuges abgewandt ausgerichtet, die Strahlrichtung mindestens einer Fluiddüse ist vom Heck des Fahrzeuges abgewandt ausgerichtet und die Strahlrichtung jeweils mindestens einer Fluiddüse ist von den Seiten des Fahrzeuges abgewandt ausgerichtet. Durch die Ausrichtung von Fluiddüsen, die vom Heck ausgehen, von den Seiten ausgehen und von der Front ausgehend ist ein Versprühen des Fluides in einem Bereich rund um das Fahrzeug ermöglicht. Somit ist das Fahrzeug durch die Vernebelung des Fluides aus allen Richtungen gegen Hitzeeinwirkungen geschützt.

In einer Weiterbildung der Erfindung sind die Strahlrichtungen mindestens einer Fluiddüse schräg in Richtung der mit dem Fahrzeug befahrenen Oberfläche gerichtet. Durch die Ausrichtung der Strahlrichtungen der Fluiddüsen in Richtung des von dem Fahrzeug befahrenen Bodens, also durch eine Ausrichtung der Strahlrichtung von den Rahmenrohren aus in Richtung des Untergrundes, kann eine Benetzung der befahrenen Oberfläche mit dem Fluid erreicht werden. Hierdurch ist eine Abkühlung der befahrenen Oberfläche zu erreichen, sodass eine Beschädigung des Fahrwerkes durch einen stark erhitzten befahrenen Untergrund unterbunden ist.

In einer Weiterbildung der Erfindung weist der Schutzrahmen an mindestens einer Seite mindestens zwei parallel zueinander angeordnete Rahmenrohrabschnitte auf und jeder Rahmenrohrabschnitt weist zumindest eine Fluiddüse auf. Durch die Anordnung mehrerer, beispielsweise zweier, parallel übereinander angeordneter Rahmenrohrabschnitte an mindestens einer Seite des Schutzrahmens, vorzugsweise an mehreren Seiten des Schutzrahmens, ist eine käfigartige Ausgestaltung des Schutzrahmen gegeben. Durch die käfigartige Ausgestaltung ist ein besonders guter Schutz des Fahrzeuges und der Fahrzeugaufbauten vor Kollisionsereignissen gegeben. Die parallel übereinander angeordneten Rahmenrohrabschnitte weisen unterschiedliche Höhen zum von dem Fahrzeug befahrenen Boden auf. Durch die an den Rahmenrohrabschnitten angeordneten Fluiddüsen kann somit das Fluid in verschiedenen Abständen zum Boden versprüht werden. Somit ist ein effizientes Versprühen des Fluides möglich. Die käfigartige Ausgestaltung und somit die Stabilität des Schutzrahmens kann durch die Anordnung von Längsstreben und Querstreben zusätzlich unterstützt werden. In einer Weiterbildung der Erfindung ist mindestens einer Fluidleitung mindestens ein ansteuerbares Ventil, insbesondere ein Magnetventil, zur Steuerung der Wasserversorgung der Fluidleitungen zugeordnet. Durch die Zuordnung eines ansteuerbaren Ventils zu der Fluidleitung ist eine Steuerung der Fluidversorgung möglich. Beispielsweise kann das ansteuerbare Ventil dem Fluidanschluss des Schutzrahmens zugeordnet sein. Durch ein Öffnen des Ventils kann die Fluidversorgung der Rahmenrohre und somit der Fluiddüsen hergestellt werden und entsprechend durch ein Schließen des Ventils wieder abgeriegelt werden. Zudem kann das Fluidvolumen, das pro Zeiteinheit durch die Rahmenrohre strömen soll, sowie der Fluiddruck in den Fluidleitungen reguliert werden. Das steuerbare Ventil kann eine datenleitende Verbindung zu einer Steuerungseinrichtung, beispielsweise zu einer zentralen Steuerungseinrichtung, des Fahrzeuges aufweisen. Bei der datenleitenden Verbindung kann es sich beispielsweise um eine Kabelverbindung, eine Funkverbindung oder Ähnliches handeln. Durch die Steuerungseinrichtung kann die Fluidversorgung beispielsweise mittels einer Fernbedienung erfolgen, ohne dass für die Steuerung der Fluidversorgung eine separate Steuerungseinrichtung vorgesehenen sein muss.

Ein weiterer Aspekt der Erfindung betrifft ein Fahrzeug mit einem erfindungsgemäßen Schutzrahmen. Insbesondere bei zur Brandbekämpfung vorgesehenen Fahrzeugen kann ein erfindungsgemäßer Schutzrahmen eingesetzt werden, um das Fahrzeug durch das Versprühen eines Fluides vor Beschädigung durch Überhitzung während des Einsatzes in Bereichen mit großer Hitze zu schützen. Das Fahrzeug und der Schutzrahmen sind über Befestigungspunkte, beispielsweise über Schraubverbindungen, miteinander verbunden. Der Schutzrahmen ist aus Rahmenrohren aufgebaut, die zur Leitung von Fluid ausgebildet sind. Durch an den Rahmenrohren angeordnete Fluiddüsen kann das Fluid in der Umgebung des Fahrzeuges versprüht werden, so dass das Fahrzeug vorzugsweise von einem Fluidnebel umgeben ist. Das Fahrzeug kann eine Pumpvorrichtung aufweisen, mittels der das Fluid durch die Fluidleitungen gepumpt werden kann.

In einer Weiterbildung der Erfindung handelt es sich bei dem Fahrzeug um ein unbemanntes Fahrzeug. Insbesondere in gefährlichen Bereichen, beispielsweise in Bereichen von Brandherden, brennenden Gebäuden, oder ähnlichen Gefahrenbereichen können unbemannte, ferngesteuert oder autonom fahrende, Fahrzeuge eingesetzt werden, um keine Personen in Gefahr bringen zu müssen. Mit einem Fahrzeug, das mit einem erfindungsgemäßen Schutzrahmen ausgerüstet ist, bei dem ein Fluid in der Umgebung des Fahrzeuges versprüht wird, ist es möglich, in Gefahrengebiete vorzudringen, da eine Beschädigung aufgrund großer Hitze durch die kühlende Wirkung des Fluides verhindert wird. Ein Wasservorrat zur Versorgung der Fluidleitungen des Schutzrahmens kann mit dem Fahrzeug mitgeführt werden.

In einer Weiterbildung der Erfindung weist das Fahrzeug einen Kettenantrieb, insbesondere einen Raupenantrieb, auf. Gerade im unwegsamen Gelände oder Katastrophengebieten kann durch einen Raupenantrieb eine Fortbewegung des Fahrzeuges sichergestellt sein. Auch in Bereichen, in denen eine große Hitze vorherrscht, weist ein Kettenantrieb eine hohe Widerstandsfähigkeit gegen die Einflüsse auf.

In einer Weiterbildung der Erfindung weist das Fahrzeug mindestens einen Fluidbehälter, insbesondere einen Wassertank, auf. Zur Versorgung der Fluidleitungen und der Fluiddüsen mit dem zu versprühendem Fluid, weist das Fahrzeug einen Fluidbehälter, insbesondere einen mit Wasser gefüllten Behälter, auf. An den Fluidbehälter ist der Fluidanschluss des Schutzrahmens, insbesondere über eine Schlauchverbindung, angeschlossen.

In einer Weiterbildung der Erfindung weist das Fahrzeug eine zentrale Steuerungseinrichtung auf und die Steuerungseinrichtung ist steuersignalleitend mit einem steuerbaren Ventil zur Steuerung der Wasserversorgung der Fluidleitungen verbunden. Das Fahrzeug weist eine Steuerungseinrichtung, beispielsweise zum Steuern der zum Fahrtbetrieb benötigten Systeme auf. Insbesondere bei unbemannten Fahrzeugen können von der Steuerungseinrichtung Befehle verarbeitet werden, die von einer Fernsteuereinrichtung an das Fahrzeug gesendet werden. Die Steuerungseinrichtung kann ebenfalls dazu eingesetzt werden, steuerbare Ventile der Fluidversorgung anzusteuern. Somit kann beispielsweise durch einen Fernsteuerbefehl festgelegt werden, wann das Fluid in der Umgebung des Fahrzeuges versprüht werden soll.

In einer Ausführungsform der Erfindung ist das Fahrzeug zur Brandbekämpfung ausgebildet. Insbesondere zum Einsatz bei Bränden mit einer großen Hitzeentwicklung können unbemannte Fahrzeuge zur Brandbekämpfung eingesetzt werden, um eine Gefährdung von Personal zu minimieren. Beispielsweise kann ein Fahrzeug Löschvorrichtungen aufweisen, die aus der Ferne gesteuert werden können. Durch den Schutzrahmen ist ein Eigenschutz des Fahrzeuges durch ein Abkühlen der Umgebung durch Versprühten des Fluides und durch die schützende Wirkung des Schutzrahmens gegeben.

Im Folgenden wird die Erfindung anhand eines in der Zeichnung dargestellten Ausführungsbeispiels weiter erläutert. Im Einzelnen zeigen die schematischen Darstellungen in:
- Figur 1:: eine perspektivische Darstellung eines Schutzrahmens mit Rahmenrohren und Fluiddüsen;
- Figur 2:: einen Schutzrahmen gemäß Fig. 1 in einer Seitenansicht; und
- Figur 3:: einen Schutzrahmen gemäß den Fig. 1 und 2 in einer Draufsicht.

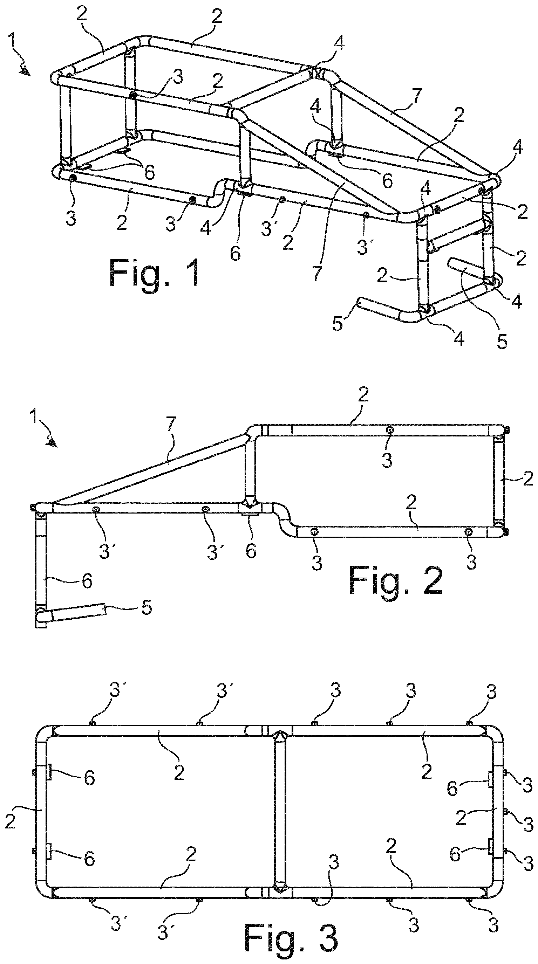

In Figur 1 ist ein Schutzrahmen 1 mit Rahmenrohren 2 und an den Rahmenrohren 2 angeordneten Fluiddüsen 3 dargestellt. Der Schutzrahmen 1 besteht aus miteinander verbundenen Rahmenrohren 2, wobei die Rahmenrohre 2 durch Verbindungsmuffen 4 miteinander verbunden sind. die Rahmenrohre 2 sind so miteinander verbunden, dass durch die verbundenen Rahmenrohre 2 ein Fluidleitungssystem ausgebildet ist. Die Rahmenrohre 2 bilden somit Fluidleitungen aus. An den äußeren Mantelflächen der Rahmenrohre 2 sind Fluiddüsen 3, 3' angeordnet, durch die ein durch die Rahmenrohre 2 geleitetes Fluid in der Umgebung des Schutzrahmens 1 versprüht werden kann. Zur Einleitung von einem Fluid, insbesondere von Wasser, weist der Schutzrahmen 1 Fluidanschlüsse 5 auf, durch die eine Verbindung zu einem Fluidbehälter, der sich auf dem zu schützenden Fahrzeug befindet, hergestellt werden kann. Bei den Fluidanschlüssen 5 kann es sich insbesondere um Schlauchleitungen, insbesondere um flexible Druckleitungen, handeln. Die Rahmenrohre 2 sind abschnittsweise parallel zueinander angeordnet, so dass der Schutzrahmen 1 käfigartig ausgebildet ist. Die Strahlrichtungen der an den Rahmenrohren 2 angeordneten Fluiddüsen 3, 3' sind vom Heck ausgehend, von der Front ausgehend und von den Seiten ausgehend ausgerichtet. Somit ist ein Versprühen des Fluides zu allen Seiten des Fahrzeuges ermöglicht. Bei parallel angeordneten Rahmenrohren 2 kann das Versprühen des Fluides auf mehreren Ebenen erfolgen. Zudem weist der Schutzrahmen 1 Fluiddüsen 3' auf, die in Richtung der mit Fahrzeug befahrenen Oberfläche gerichtet sind, Insbesondere sind die Strahlrichtungen der Fluiddüsen 3' schräg in Richtung des Bodens gerichtet. Durch die Ausrichtung in Richtung des Bodens kann eine Abkühlung der mit dem Fahrzeug befahrenen Fläche und somit ein Schutz des Fahrwerkes des Fahrzeuges erreicht werden. Zur Verbindung des Schutzrahmens 1 mit dem zu schützenden Fahrzeug weist der Schutzrahmen 1 Befestigungspunkte 6 auf. Zudem kann der Schutzrahmen 1 nichtfluidleitende Versteifungselemente 7 aufweisen, die beispielsweise auch durch Rahmenrohrabschnitte ausgebildet sein können.

In Figur 2 ist ein Schutzrahmen 1 gemäß Figur 1 dargestellt. Gleiche Bauteile sind mit gleichen Bezugszeichen versehen. An den Rahmenrohren 2 sind Fluiddüsen 3, 3' angeordnet, wobei die Fluiddüsen 3 zu einer Seite des Fahrzeuges gerichtet sind und die Fluiddüsen 3' schräg in Richtung der mit dem Fahrzeug befahrenen Oberfläche ausgerichtet sind.

In Figur 3 ist ein Schutzrahmen 1 gemäß der Figuren 1 und 2 dargestellt. Gleiche Bauteile sind mit gleichen Bezugszeichen versehen. An den Rahmenrohren 2 des Schutzrahmens 1 sind mehrere Fluiddüsen 3, 3' angeordnet, so dass das zu versprühende Fluid gleichmäßig in der Umgebung des Fahrzeuges verteilt werden kann.

Alle in der vorstehenden Beschreibung und in den Ansprüchen genannten Merkmale sind in einer beliebigen Auswahl mit den Merkmalen der unabhängigen Ansprüche kombinierbar. Die Offenbarung der Erfindung ist somit nicht auf die beschriebenen bzw. beanspruchten Merkmalskombinationen beschränkt, vielmehr sind alle im Rahmen der Erfindung sinnvollen Merkmalskombinationen als offenbart zu betrachten.

## Patentansprüche

1. Schutzrahmen für ein Fahrzeug aus miteinander verbundenen Rahmenrohren (2), wobei der Schutzrahmen (1) Befestigungspunkte (6) zur Befestigung des Schutzrahmens (1) an dem zu schützenden Fahrzeug aufweist,
**dadurch gekennzeichnet,**
**dass** mindestens ein Rahmenrohr (2) zur Leitung eines Fluides ausgebildet ist und
**dass** mindestens ein Rahmenrohr (2) mindestens eine Fluiddüse (3) zum Versprühen des Fluides aufweist.

2. Schutzrahmen nach Anspruch 1, **dadurch gekennzeichnet, dass** mindestens ein Rahmenrohr (2) eine Fluidleitung ausbildet.

3. Schutzrahmen nach Anspruch 1, **dadurch gekennzeichnet, dass** mindestens ein Rahmenrohr (2) eine Fluidleitung aufweist.

4. Schutzrahmen nach einem der Ansprüche 1 bis 3, **dadurch gekennzeichnet, dass** es sich bei den Fluiddüsen (3, 3') um Zerstäuberdüsen handelt.

5. Schutzrahmen nach einem der Ansprüche 1 bis 4, **dadurch gekennzeichnet, dass** der Schutzrahmen (1) mindestens einen Fluidanschluss (5) zum Anschluss an eine Fluidversorgung des Fahrzeuges aufweist.

6. Schutzrahmen nach einem der Ansprüche 1 bis 5, **dadurch gekennzeichnet, dass** die Strahlrichtungen der Fluiddüsen (3, 3') vom Fahrzeug abgewandt ausgerichtet sind.

7. Schutzrahmen nach einem der Ansprüche 1 bis 6, **dadurch gekennzeichnet, dass** die Strahlrichtung mindestens einer Fluiddüse (3) von der Front des Fahrzeuges abgewandt ausgerichtet ist, dass die Strahlrichtung mindestens einer Fluiddüse (3) vom Heck des Fahrzeuges abgewandt ausgerichtet ist und dass die Strahlrichtung jeweils mindestens einer Fluiddüse (3) von den Seiten des Fahrzeuges abgewandt ausgerichtet ist.

8. Schutzrahmen nach einem der Ansprüche 1 bis 7, **dadurch gekennzeichnet, dass** die Strahlrichtungen mindestens einer Fluiddüse (3') schräg in Richtung der mit dem Fahrzeug befahrenen Oberfläche gerichtet ist.

9. Schutzrahmen nach einem der Ansprüche 1 bis 8, **dadurch gekennzeichnet, dass** der Schutzrahmen an mindestens einer Seite mindestens zwei parallel zueinander angeordnete Rahmenrohrabschnitte aufweist und dass jeder Rahmenrohrabschnitt zumindest eine Fluiddüse (3, 3') aufweist.

10. Schutzrahmen nach einem der Ansprüche 1 bis 9, **dadurch gekennzeichnet, dass** mindestens einer Fluidleitung mindestens ein ansteuerbares Ventil, insbesondere ein Magnetventil, zur Steuerung der Fluidversorgung der Fluidleitungen zugeordnet ist.

11. Fahrzeug mit einem Schutzrahmen (1) nach einem der vorhergehenden Ansprüche.

12. Fahrzeug nach Anspruch 11, **dadurch gekennzeichnet, dass** es sich bei dem Fahrzeug um ein unbemanntes Fahrzeug handelt.

13. Fahrzeug nach einem der Ansprüche 11 oder 12, **dadurch gekennzeichnet, dass** das Fahrzeug einen Kettenantrieb, insbesondere einen Raupenantrieb, aufweist.

14. Fahrzeug nach einem der Ansprüche 11 bis 13, **dadurch gekennzeichnet, dass** das Fahrzeug mindestens einen Fluidbehälter, insbesondere einen Wassertank, aufweist.

15. Fahrzeug nach einem der Ansprüche 12 bis 14, **dadurch gekennzeichnet, dass** das Fahrzeug eine zentrale Steuerungseinrichtung aufweist und dass die Steuerungseinrichtung steuersignalleitend mit einem steuerbaren Ventil zur Steuerung der Wasserversorgung der Fluidleitungen verbunden ist.
